Europäisches Patentamt

European Patent Office

Office européen des brevets

(19)

(11) Veröffentlichungsnummer: **0 034 289**
**B1**

(12) **EUROPÄISCHE PATENTSCHRIFT**

(45) Veröffentlichungstag der Patentschrift:
**25.01.84**

(21) Anmeldenummer: **81100694.9**

(22) Anmeldetag: **31.01.81**

(51) Int. Cl.³: **E 02 F  3/88,** B 65 G  53/30,
B 65 G  53/52

(54) **Vorrichtung zum Fördern von schüttfähigem Gut, insbesondere unter Wasser lagerndem Sand, Kies o. dgl.**

(30) Priorität: **15.02.80  DE 3005669**

(43) Veröffentlichungstag der Anmeldung:
**26.08.81 Patentblatt 81/34**

(45) Bekanntmachung des Hinweises auf die Patenterteilung:
**25.01.84 Patentblatt 84/4**

(84) Benannte Vertragsstaaten:
**BE CH FR GB LI NL SE**

(56) Entgegenhaltungen:
**CH - A - 498 257**
**DE - A - 2 214 130**
**DE - B - 1 802 153**
**DE - B - 2 004 508**
**DE - B - 2 355 831**
**DE - C - 489 629**
**FR - A - 2 168 167**
**FR - A - 2 239 562**
**GB - A - 901 550**
**US - A - 3 416 842**

(73) Patentinhaber: **Schüttgutfördertechnik AG,
Espenmoosstrasse 1, CH-9009 St. Gallen (CH)**

(72) Erfinder: **Schnell, Ludwig Lorenz, Welkfeldstrasse 242,
D-7081 Aufhausen (DE)**

(74) Vertreter: **Hoeger, Stellrecht & Partner,
Uhlandstrasse 14c, D-7000 Stuttgart 1 (DE)**

# Vorrichtung zum Fördern von schüttfähigem Gut, insbesondere unter Wasser lagerndem Sand, Kies od. dgl.

Die Erfindung betrifft eine Vorrichtung zum Fördern von schüttfähigem Gut, insbesondere unter Wasser lagerndem Sand, Kies od. dgl., bei der das Gut in einen Förderkopf eintritt und durch einen mit dem Förderkopf verbundenen, flexiblen Schlauch weiter befördert wird, der seinerseits in einem axial unverdrehbar gehaltenen Rohr geführt und an seinem dem Förderkopf abgewandten Ende mit einer Schlauchtrommel verbunden ist.

Bei einer bekannten Vorrichtung dieser Art (FR-A Nr. 2239562) besteht das den Schlauch führende Rohr aus mehreren Abschnitten, die je nach Schlauchlänge mit einer Hilfsvorrichtung zusammen- oder auseinandermontiert werden müssen. Ausserdem weist die bekannte Vorrichtung keine Mittel auf, mit deren ein mit hoher Geschwindigkeit gefördertes Gut am Ende des Förderweges abgebremst werden könnte. Es ist weiterhin eine Saugbaggervorrichtung (DE-B Nr. 2355831) bekannt, bei welcher das zu fördernde Gut unmittelbar in einem längenveränderbaren Teleskoprohr geführt ist. Dabei treten jedoch Dichtungsprobleme auf und das am Ende seiner Förderstrecke anlangende Gut wird ebenfalls nur unvollkommen abgebremst.

Es ist Aufgabe der Erfindung, eine gattungsgemässe Vorrichtung so auszubilden, dass die Förderleitung in einfacher Weise längenveränderlich ist und gleichzeitig eine sichere Abbremsung des geförderten Gutes gewährleistet ist.

Die Aufgabe wird erfindungsgemäss dadurch gelöst, dass das Rohr als längenveränderbares Teleskoprohr ausgebildet ist, dass das mit der Schlauchtrommel verbundene Schlauchende in einen Prallbehälter mündet, und dass der Prallbehälter als kegelstumpfartiges Gefäss ausgebildet ist mit an seinem oberen Rand im wesentlichen tangential eingeführten Rohrstutzen zum Anschluss des Schlauchendes und mit einem bodenseitigen Auslassrohr für das geförderte Gut.

Weitere Merkmale der Erfindung sind Gegenstand der Unteransprüche 2 bis 5.

Die nachstehende Beschreibung von Ausführungsbeispielen dient im Zusammenhang mit beiliegender Zeichnung der weiteren Erläuterung der Erfindung. Es zeigen:

Fig. 1 schematisch eine Seitenansicht einer Schwimmbaggervorrichtung mit Teleskoprohr;

Fig. 2 eine Draufsicht der Vorrichtung aus Fig. 1;

Fig. 3 eine Teilansicht des Teleskoprohres mit angeschlossenem Förderkopf;

Fig. 4 eine Ansicht ähnlich Fig. 3 mit einem anderen Förderkopf;

Fig. 5 eine Einzelansicht des Teleskoprohrs;

Fig. 6 eine Schnittansicht entlang der Linie 6-6 in Fig. 5;

Fig. 7 eine Einzelansicht eines Drehgelenks für das Förderrohr;

Fig. 8 eine Draufsicht einer Schlauchtrommel, und

Fig. 9 eine Schnittansicht der Schlauchtrommel entlang der Linie 9-9 in Fig. 8.

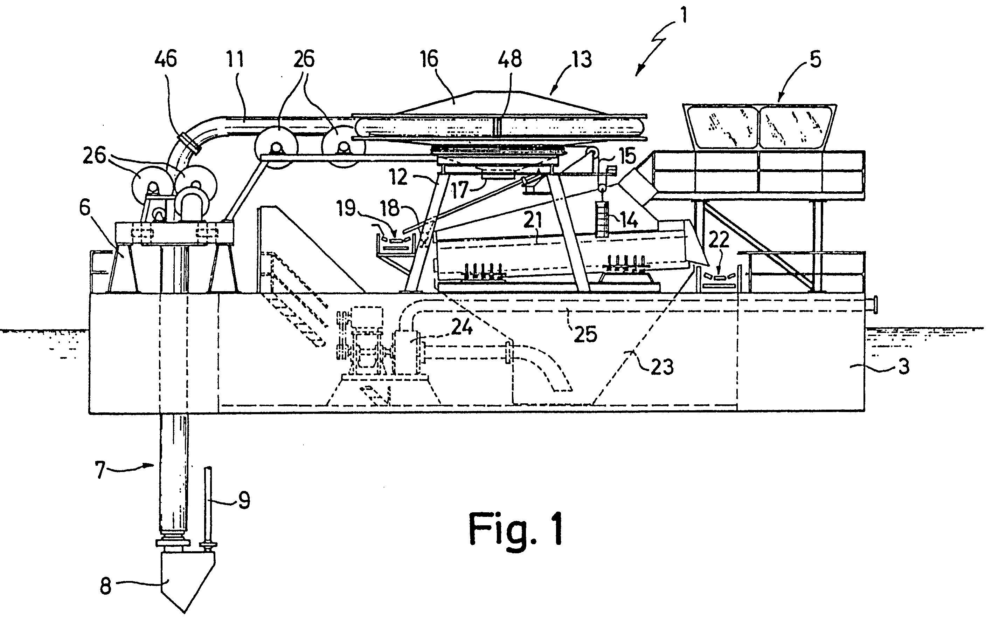

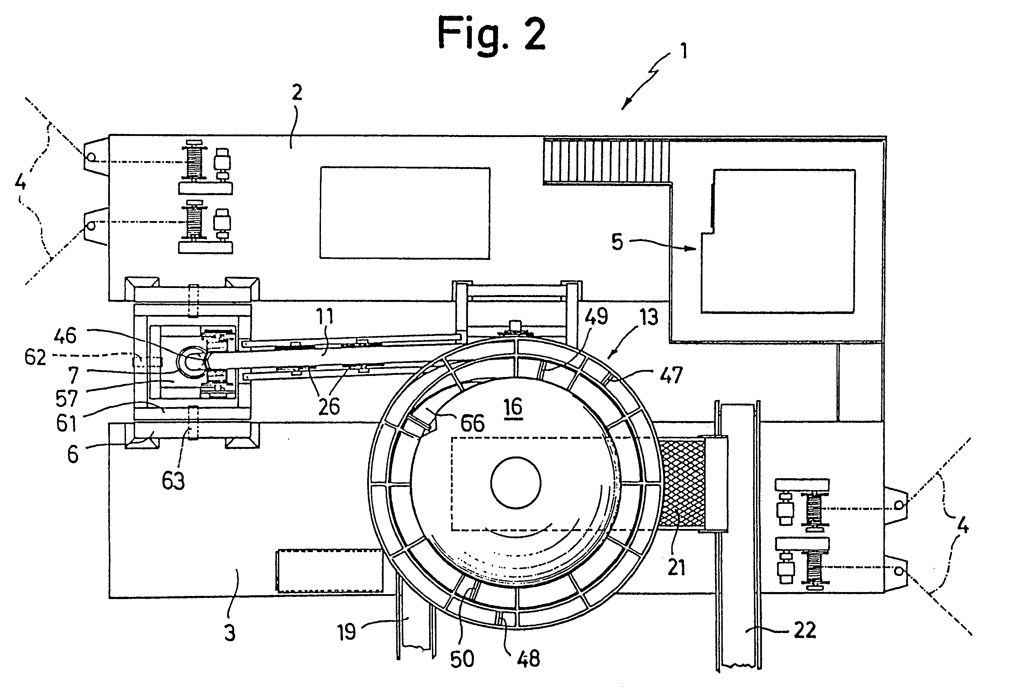

Die in Fig. 1 und 2 dargestellte Schwimmbaggervorrichtung 1 umfasst einen aus zwei miteinander verbundenen Pontons 2, 3 bestehenden Schwimmkörper, der über Seile 4, auf der Wasseroberfläche, beispielsweise eines Baggersees oder im Meer, verankert werden kann. Der Schwimmkörper trägt ein Steuerhaus 5, von dem aus über übliche Fernsteuerleitungen alle nötigen Kommandos und Betätigungssignale zu den entsprechenden Betriebsstellen hingeleitet werden können. Auf einem Lagerbock 6 ist in später noch zu beschreibender Weise ein aus mehreren ineinander gleitbaren Abschnitten bestehendes Teleskoprohr 7 gelagert, das — vergl. Fig. 2 — zwischen den beiden Pontons 2, 3 in das Wasser eintaucht und an seinem unteren Ende mit einem Förderkopf 8 herkömmlicher Bauart verbunden ist. Mit dem Förderkopf 8 wird unter Wasser lagerndes Schüttgut, beispielsweise Kies, Sand, Erz od. dgl. aufgenommen und an die Wasseroberfläche befördert. Zur Aufnahme des Schüttgutes wird der Förderkopf 8 auf den Grund des Wassers in an sich bekannter Weise aufgesetzt. Mit dem Förderkopf 8 ist in ebenfalls an sich bekannter Weise eine Druckleitung 9 verbunden, die der Zuführung eines Druckmediums, beispielsweise Druckluft oder Druckwasser, dient. Das obere, in Fig. 1 nicht dargestellte Ende der Leitung 9 ist auf der Schwimmbaggervorrichtung 1 mit einem Kompressor zur Erzeugung des gewünschten Drucks verbunden. Unter der Wirkung des zugeführten Druckmediums wird das zu fördernde Gut aus dem Förderkopf 8 über das Teleskoprohr 7 auf die Baggervorrichtung 1 gefördert.

Wie aus Fig. 1 und 2 ersichtlich, tritt aus dem oberen Ende des Teleskoprohrs 7 ein flexibler Schlauch 11 aus, der auf eine drehbar auf einem Lagergestell 12 gelagerte Schlauchtrommel 13 aufwickelbar ist. Um die Schlauchtrommel ist unterhalb einer Aufnehmung für den Schlauch 11 ein mit einem Gegengewicht 14 belastetes Seil 15 herumgeführt. Das Gegengewicht 14 hat das Bestreben, die Seiltrommel in Fig. 2 im Uhrzeigersinn zu verdrehen und hierdurch den Schlauch 11 aufzuwickeln bzw. einer Abwicklung eine entsprechende Gegenkraft entgegenzusetzen. Das an der Innenseite der Schlauchtrommel gelegene, freie Ende des Schlauches mündet in ebenfalls noch zu beschreibender Weise in einen Prallbehälter 16, der das vom Förderkopf 8 und dem Teleskoprohr 7 herkommende, über den Schlauch 11 zugeführte Schüttgut aufnimmt. Aus einer zentral gelegenen Auslassöffnung 17 des konisch ausgebildeten Prallbehälters 16 fällt das geförderte Schüttgut mit Wasser vermischt auf ein erstes, vorzugsweise maschinell gerütteltes Sieb 18, welches der Grobkornabscheidung dient. Grobes Schüttgut gelangt vom Sieb 18 auf einen Bandförderer 19, der es zu einer gewünschten Stelle weiter befördert. Schüttgut mit mittlerer Körnung bleibt auf einem ebenfalls maschinell angetriebenen Rüttelsieb 21 liegen und wird zu einem Bandförderer 22 hin transportiert. Feines Schüttgut, z.B. Sand und Wasser gelangen durch das Sieb 21 hindurch in einen Sammelbehälter 23. Eine Pumpenanlage 24 dient der Weiterbeförderung des Sand-Wasser-Gemisches aus dem Behälter 23 über eine Leitung 25 zu einem Zyklonabscheider, der nicht dargestellt ist und sich beispielsweise ebenfalls auf dem Schwimmkörper befinden kann.

Auf dem Schwimmkörper sind weiterhin an verschiedenen Stellen Rollen 26 drehbar gelagert, die der Führung des Schlauches 11 dienen.

Der Schlauch 11 ist an seinem der Schlauchtrommel 13 abgekehrten Ende mit dem Förderkopf 8 verbunden und wird beim Auseinander- oder Zusammenschieben des Teleskoprohrs 7 in entsprechender Länge von der Schlauchtrommel 13 ab- bzw. auf diese aufgewickelt, so dass in jedem Falle unabhängig von der effektiven Länge des Teleskoprohrs 7 eine direkte Schlauchverbindung zwischen Förderkopf 8 und Prallbehälter 16 besteht.

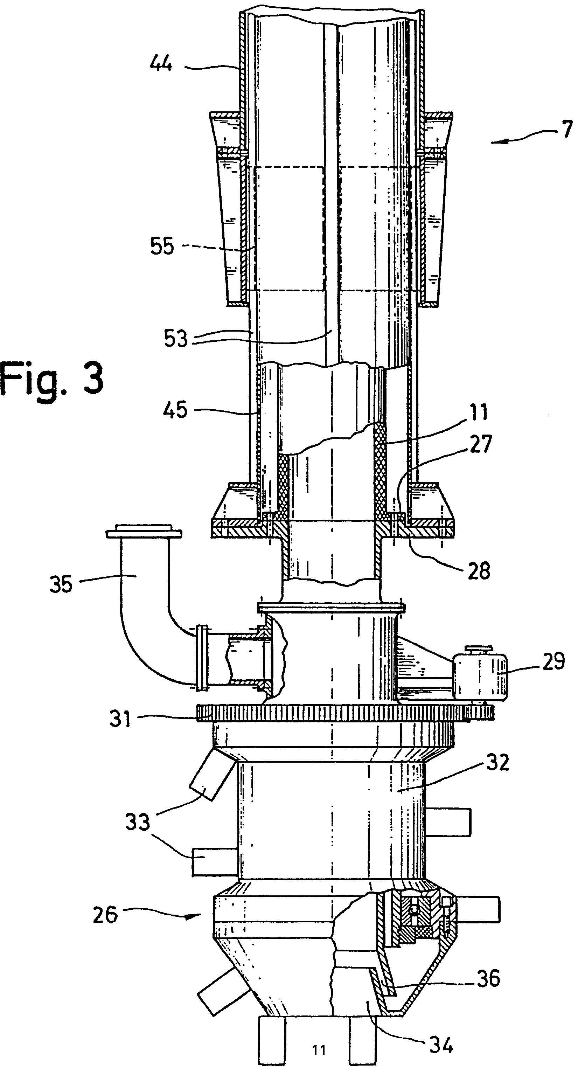

Fig. 3 zeigt die Verbindung des Schlauches 11 mit einer bevorzugten Ausführungsform eines Förderkopfes 26. Wie dargestellt, ist am Ende des Schlauches 11 ein Flansch 27 ausgebildet, der — gegebenenfalls unter Beifügung von Unterlegscheiben — durch Schrauben dicht mit einem Flansch 28 des Förderkopfes 26 verbindbar ist. Der Förderkopf 26 ist als an sich bekannter Drehkopf ausgebildet und braucht hier im einzelnen nicht beschrieben zu werden. Er weist einen durch einen Elektromotor 29 über einen Zahnkranz 31 drehbaren Aussenmantel 32 auf, an dem Schneidglieder 33 zur Lockerung des zu fördernden Schüttgutes am Wassergrund angeordnet sind. Das zu fördernde Schüttgut tritt durch eine Einlassöffnung 34 in den Kopf 26 ein. Das für die Förderung des Schüttgutes an die Wasseroberfläche erforderliche Druckmedium wird über einen Stutzen 35 zugeführt, an den die Leitung 9 (Fig. 1) angeschlossen wird. Das Druckmedium tritt über einen Spalt 36 in der Nähe der Einlassöffnung 34 in den Förderkopf ein und reisst ein Schüttgut-Wasser-Gemisch mit sich nach oben in den Schlauch 11 und von da an die Wasseroberfläche in den Prallbehälter 16.

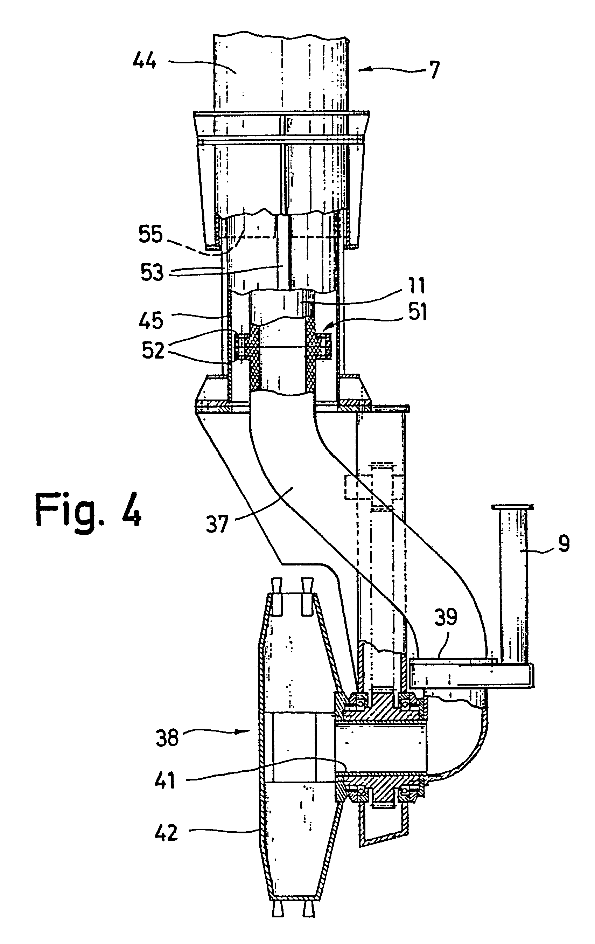

Bei dem in Fig. 4 dargestellten Ausführungsbeispiel ist der im Teleskoprohr 7 geführte Schlauch 11 mit einem weiteren Schlauchstück 37 verbunden, welches seinerseits in der aus Fig. 3 ersichtlichen Weise an einen Förderkopf 38 mittels eines Flansches 39 angeflanscht ist. Der Förderkopf 38 ist von an sich bekannter Bauart. An seiner Einlassöffnung 41 ist ein von einem Hydraulikmotor angetriebenes Schaufelrad 42 angeordnet, welches um eine quer zur Achse des Teleskoprohres 7 verlaufende Achse drehbar ist. Das Druckmedium wird über die Leitung 9, von der in Fig. 4 lediglich ein Teilstück dargestellt ist, in den Förderkopf 38 eingeleitet. Im übrigen funktioniert der Förderkopf gemäss Fig. 4 ebenso wie derjenige nach Fig. 3.

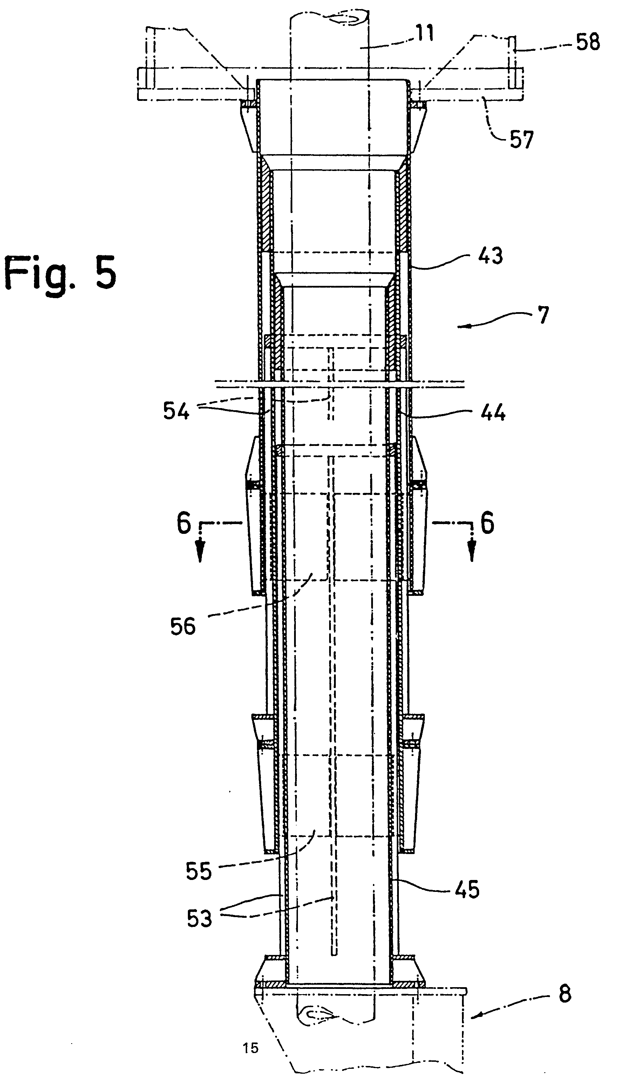

In Fig. 5 ist der Aufbau des Teleskoprohrs 7 dargestellt. Das Teleskoprohr umfasst im dargestellten Beispiel drei ineinander teleskopierende Abschnitte 43, 44 und 45. Der aussen gelegene, oberste Abschnitt 43 ist mit seinem oberen Ende am Lagergestell 6 (Fig. 1) befestigt. Der innerste Abschnitt 45, der den kleinsten Durchmesser von allen Abschnitten hat, ist starr mit dem Förderkopf 8 verbunden. Zwischen den Abschnitten 43 und 45 können grundsätzlich beliebig viele Zwischenabschnitte 44 angeordnet sein. Der Innendurchmesser des untersten Abschnittes 45 ist grösser als der Aussendurchmesser des Schlauches 11, so dass dieser überall frei im Teleskoprohr 7 verläuft. Wird das Teleskoprohr 7 auseinandergezogen, so muss, wie bereits beschrieben, eine entsprechende Schlauchlänge von der Trommel 13 abgewikkelt werden. Beim Zusammenschieben des Teleskoprohrs 7 muss eine entsprechende Länge des Schlauches 11 wieder auf die Trommel 13 aufgewickelt werden. Aus Fig. 5 ist ersichtlich, dass das im Schlauch 11 geförderte Schüttgut nirgendwo in direkte Berührung mit der Innenwand des Teleskoprohres 7 gelangt. Infolgedessen unterliegt dieses keinem Verschleiss und braucht gegenüber dem das Schüttgut nach oben treibenden Druckmedium auch nicht besonders abgedichtet zu sein, da der Schlauch 11 ein von Haus aus dichtes Bauteil ist. Der aus Gummi oder Kunststoff gefertigte Schlauch 11 kann in handelsüblicher Weise ohne weiteres aus verschleissfestem Material als sogenannter Panzerschlauch hergestellt werden, wobei das aus Kunststoff oder Gummi bestehende Grundmaterial durch Metalleinlagen oder Einlagen aus anderem Werkstoff, z.B. Metallgewebe, verstärkt sein kann. Der Durchmesser des Schlauches beträgt vorzugsweise mehr als 20 cm, jedoch können auch Schläuche kleineren Durchmessers in Frage kommen.

Der Schlauch 11 besteht bei der bevorzugten Ausführungsform der Erfindung aus mehreren, jeweils stirnseitig miteinander verbundenen Teilstücken, wie dies in Fig. 1 und 2 durch die Verbindungsstellen 46, 47, 48, 49 und 50 angedeutet ist. Diese Teilstücke können eine Länge von einigen Metern haben und zu beliebiger Länge aneinandergefügt werden. Die Führungsrollen 26 und die Breite der Aufnahme an der Schlauchtrommel 13 sind so bemessen, dass die erwähnten Verbindungsstellen beim Auf- und Abwickeln des Schlauches keine Hindernisse darstellen. Die Verbindungsstellen selbst sind so ausgebildet, wie in Fig. 4 an der Stelle 51 dargestellt ist. Jedes Teilstück des Schlauches 11 weist an seinen beiden Stirnseiten einen Flansch auf (vergl. den Flansch 27 in Fig. 3). Dieser Flansch wird jeweils mit dem entsprechenden Flansch eines nachfolgenden Teilstücks durch Schrauben verbunden, wobei Unterlegscheiben jeweils auf die Aussenseite der Flansche aufgebracht werden können. Diese Unterlegscheiben können aus zwei mit Löchern versehenen, halbkreisförmigen Teilkranzstücken bestehen. Derartige Unterlegscheiben sind in Fig. 4 mit dem Bezugszeichen 52 bezeichnet. Da das Material des Schlauches 11 und der an seinen Stirnseiten vorgesehenen Flansche 27 flexibel und elastisch ist, entstehen beim Zusammenfügen zweier Teilstücke des Schlauches keinerlei Abdichtungsprobleme.

Bei der erfindungsgemässen Fördervorrichtung üben Teleskoprohr 7 und Schlauch 11 unterschiedliche Funktionen aus: Das Teleskoprohr 7 dient der Halterung und Abstützung des Förderkopfes 8. Ist dieser Förderkopf, wie in Fig. 3 und 4 dargestellt, als Drehkopf ausgebildet, so dient das Teleskoprohr 7 gleichzeitig noch als Drehmomentstütze. Diese Funktionen kann der Schlauch 11 wegen seines elastisch nachgiebigen, flexiblen Aufbaus nicht erfüllen. Der Schlauch 11 dient aber der druckdichten und verschleissicheren Abbeförderung des vom Förderkopf 8 aufgenommenen Schüttgutes, so dass das Teleskoprohr 7 als solches nicht druckmitteldicht und verschleissfest ausgeführt zu werden braucht, was, wie eingangs erwähnt, schwierig zu realisieren ist.

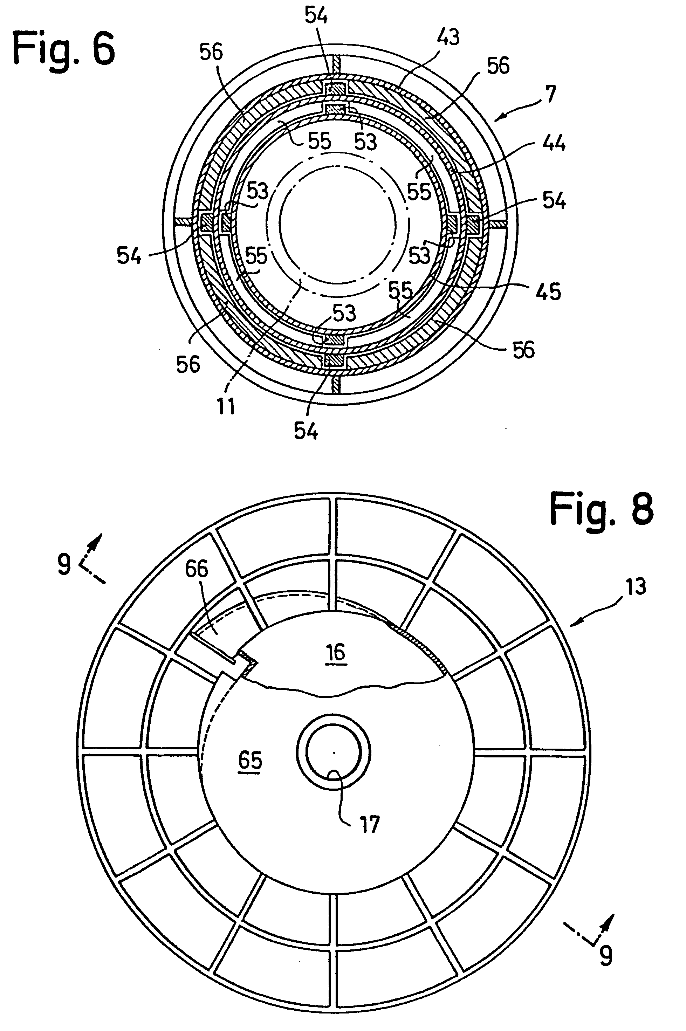

Das Teleskoprohr 7 enthält in an sich bekannter und deshalb nicht eigens dargestellter Weise Anschläge für die einzelnen Abschnitte, so dass diese nur soweit auseinandergeschoben werden, dass das auseinandergeschobene Rohr axial die erforderliche Steifheit beibehält. In Fig. 6 ist dargestellt, wie die einzelnen Abschnitte 43, 44, 45 des Teleskoprohrs relativ zueinander unverdrehbar gehalten sind. Hierzu sind an den Aussenseiten der Abschnitte 44, 45 in Axialrichtung des Rohres verlaufende Leisten 53, 54 angeordnet. Diese Leisten verlaufen jeweils zwischen horizontal angeordneten Stegen 55, 56, die an den Innenwänden der Abschnitte 44 bzw. 43 befestigt sind und sich unter Freilassung entsprechender Zwischenräume für das Vorbeipassieren der Leisten 53, 54 etwa jeweils über einen Viertelkreis erstrecken. Die Leisten 53, 54 verlaufen im wesentlichen jeweils über die gesamte Länge des betreffenden Rohrabschnittes hinweg; die Stege 55, 56 sind unter Einhaltung bestimmter Abstände an den betreffenden Rohrabschnitten vorgesehen, wobei am einzelnen Rohrabschnitt wenigstens zwei solcher Stege vorgesehen sind.

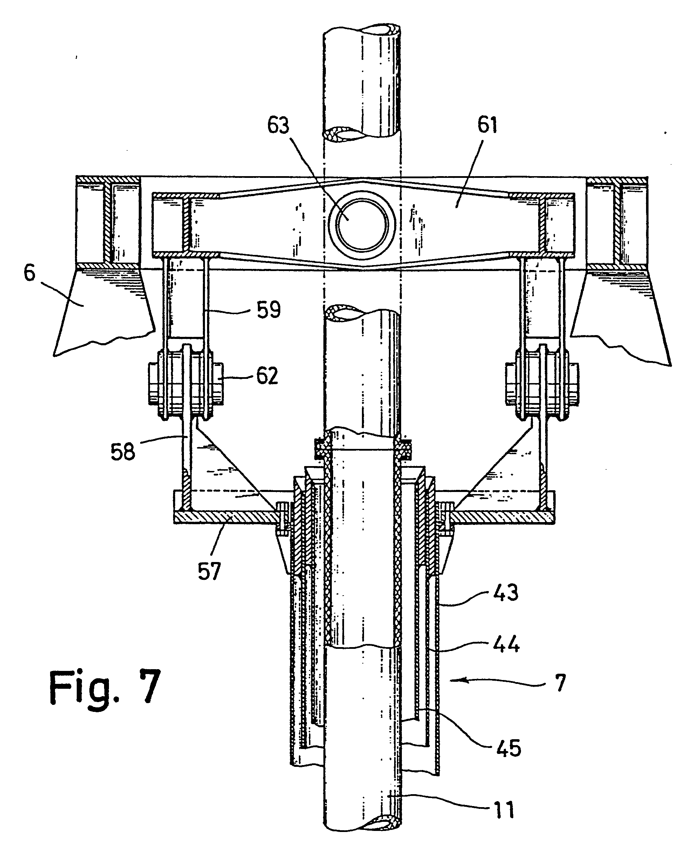

Fig. 7 zeigt die schwenkbare Lagerung des den Schlauch 11 umgebenden Teleskoprohrs 7 am Lagerbock 6. Wie dargestellt, ist der oberste, den grössten Durchmesser besitzende Rohrabschnitt 43 des Teleskoprohrs 7 mit einem Joch 57 starr verbunden, von dem zwei Schenkel 58 nach oben abstehen. Die Schenkel 58 sind gelenkig mit Schenkeln 59 verbunden, die von einem weiteren Joch 61 nach unten abstehen. Die Gelenkbolzen sind in Fig. 7 mit 62 bezeichnet. Hierdurch ist eine Schwenkbarkeit des Teleskoprohrs 7 in einer senkrecht zur Zeichnungsebene liegenden Ebene gewährleistet. Das obere Joch 61, welches den Schlauch 11 wie ein Rahmen umgibt, ist seinerseits an zwei gegenüberliegenden Gelenkbolzen 63 am Lagerbock 6 schwenkbar gelagert, so dass das Teleskoprohr 7 in der Zeichnungsebene verschwenkt werden kann. Insgesamt ergibt sich so eine universelle Verschwenkbarkeit des Teleskoprohrs 7 um zwei senkrecht zueinander stehende Achsen, die in einer senkrecht zur Rohrachse liegenden Ebene verlaufen.

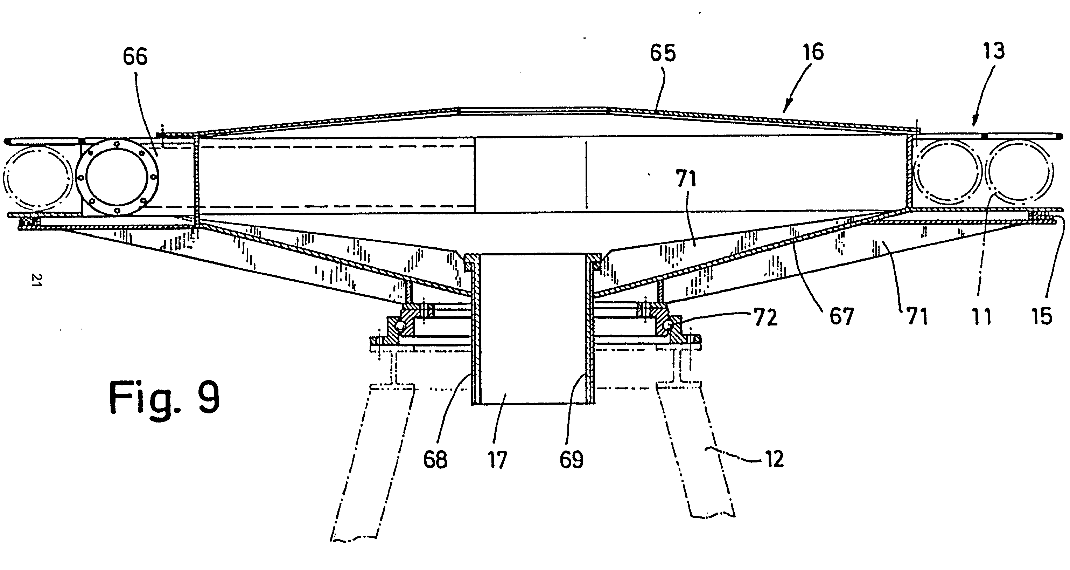

Um das von einer Schwimmbaggervorrichtung geförderte, mit ziemlich hoher Geschwindigkeit an der Wasseroberfläche anlangende Schüttgut abzubremsen, muss am Auslassende der Förderleitung ein sogenannter «Prallbehälter» angeordnet werden. Ein solcher Prallbehälter wurde bereits im voranstehenden erwähnt und ist in Fig. 1 mit dem Bezugszeichen 16 bezeichnet. Es wurde gefunden, dass die restlichen, bei teilweise ausgezogenem Teleskoprohr 7 auf der Schlauchtrommel verbleibenden Schlauchwindungen, wobei es sich beispielsweise um lediglich etwa eine Viertel Windung zu handeln braucht, ausreichen, um das geförderte Schüttgut umzulenken und abzubremsen. Eine erste Umlenkung und Abbremsung des Schüttgutes findet im übrigen bereits im Schlauchbogen zwischen Lagerbock 6 und Schlauchtrommel 13 (in Fig. 1 im Bereich der Verbindungsstelle 45) statt. Wie in Fig. 8 und 9 gezeigt, ist der als kegelstumpfartiges Gefäss ausgebildete und mit einem Deckel 65 abgedeckte Prallbehälter 16 an seinem oberen Rand mit einem im wesentlichen tangential eingeführten Rohrstutzen 66 versehen. An diesen Rohrstutzen wird das letzte Teilstück des Schlauchs 11 angeflanscht. Das geförderte Schüttgut wird mithin tangential in den Prallbehälter 16 eingeleitet, abgebremst und zum Boden 67 abgelenkt. Die Innenseiten des Prallbehälters 16, also gegebenenfalls auch die Innenseite des Deckels 65, sind mit einem Verschleissschutz versehen, vorzugsweise ausgummiert. Wie sich aus Fig. 9 ergibt, steht ein Auslassrohr 68, welches an seiner Innenseite einen Verschleissschutz, beispielsweise eine Gummischicht 69, über den Boden 67 des Prallbehälters 16 nach oben vor trägt. Es ergibt sich so ein Sammelraum für gefördertes Schüttgut auf dem mit radial verlaufenden Stegen 71 verstärkten Boden 67 des Prallbehälters 16. In diesem Raum sammelt sich stets ein Rest von gefördertem Schüttgut an, welches von alleine nicht ablaufen kann. Dieser Rest an Schüttgut wirkt ebenfalls als Verschleisschutz, da neu gefördertes Schüttgut an ihm abprallt, ohne dabei am Boden 67 selbst einen Verschleiss hervorrufen zu können.

Bei dem dargestellten Ausführungsbeispiel (vergl. insbesondere Fig. 9) sind Schlauchtrommel 13 und Prallbehälter 16 zu einer Einheit miteinander verbunden, die als Ganzes auf dem Lagergestell 12 in Kugellagern 72 drehbar gelagert ist. Bei einer anderen Ausführungsform der Erfindung kann vorgesehen sein, den Prallbehälter 16 ortsfest auf dem Lagergestell 12 anzuordnen und lediglich die Schlauchtrommel 13 als drehbares Teil auszubilden.

## Patentansprüche

1. Vorrichtung zum Fördern von schüttfähigem Gut, insbesondere unter Wasser lagerndem Sand, Kies od. dgl., bei der das Gut in einen Förderkopf (8) eintritt und durch einen mit dem Förderkopf verbundenen, flexiblen Schlauch (11) weiter befördert wird, der seinerseits in einem axial unverdrehbar gehaltenen Rohr geführt und an seinem dem Förderkopf abgewandten Ende mit einer Schlauchtrommel (13) verbunden ist, dadurch gekennzeichnet, dass das Rohr als längenveränderbares Teleskoprohr (7) ausgebildet ist, dass das mit der Schlauchtrommel verbundene Schlauchende in einen Prallbehälter (16) mündet, und dass der Prallbehälter (16) als kegelstumpfartiges Gefäss ausgebildet ist mit an seinem oberen Rand im wesentlichen tangential eingeführten Rohrstutzen (66) zum Anschluss des Schlauchendes und mit einem bodenseitigen Auslassrohr (68) für das geförderte Gut.

2. Vorrichtung nach Anspruch 1, dadurch gekennzeichnet, dass der Schlauch (11) aus mehreren, jeweils stirnseitig miteinander verbundenen Teilstücken besteht.

3. Vorrichtung nach einem der Ansprüche 1 oder 2, dadurch gekennzeichnet, dass der Prallbehälter (16) gemeinsam mit der Schlauchtrommel (13) drehbar ist.

4. Vorrichtung nach einem der Ansprüche 1, 2 oder 3, dadurch gekennzeichnet, dass die Innenseite des Prallbehälters (16) mit einem Verschleissschutz (69) versehen, insbesondere ausgummiert ist.

5. Vorrichtung nach einem der Ansprüche 1 bis 4, dadurch gekennzeichnet, dass der nach einwärts konisch verlaufende Boden (67) des Prallbehälters (16) einwärts von dem Auslassrohr (68) überragt ist.

**Claims**

1. Apparatus for conveying pourable material, in particular sand, gravel or the like located under water, in the case of which the material enters a conveyor head (8) and is conveyed further by a flexible hose (11) which is connected to the conveyor head and is in turn guided in a tube, which is retained such that it cannot rotate axially, and is connected at its end remote from the conveyor head to a hose reel (13), characterized in that the tube is constructed as a telescopic tube (7), the length of which is adjustable; in that the end of the hose connected to the hose reel leads into a baffle container (16); and in that the baffle container (16) is constructed as a frusto-conically shaped vessel with tube connection pieces (66) inserted in an essentially tangential manner at its upper edge for the connection of the hose end and with an outlet tube (68) on the base side for the material conveyed.

2. Apparatus as claimed in claim 1, characterized in that the hose (11) consists of a plurality of parts connected to one another in each case at the front end.

3. Apparatus as claimed in claim 1 or 2, characterized in that the baffle container (16) may be rotated together with the hose reel (13).

4. Apparatus as claimed in claim 1, 2 or 3, characterized in that the inner side of the baffle container (16) is provided with a device (69) for protection against wear, in particular it is rubber coated.

5. Apparatus as claimed in one of claims 1 to 4, characterized in that the base (67), which extends conically inwardly of the baffle container (16) is projected over inwardly by the outlet tube (68).

**Revendications**

1. Dispositif pour l'extraction de matières en vrac, notamment de sable, gravier ou matériaux analogues se trouvant sous l'eau, dans lequel la matière pénètre dans une tête d'extraction (8) et est transportée au-delà par un tuyau flexible (11) et qui, de son côté, est guidé dans un tube axial, tenu bloqué en rotation, et est relié à un tambour de tuyau (13) à son extrémité la plus éloignée de la tête d'extraction, ce dispositif étant caractérisé en ce que le tube est constitué par un tube télescopique (7) de longueur variable, en ce que l'extrémité du tuyau qui est reliée au tambour de tuyau débouche dans un récipient à choc (16) et en ce que le récipient à choc (16) est constitué par un récipient tronconique muni, au niveau de son bord supérieur, d'une tubulure (66) introduite à peu près tangentiellement, servant pour le raccordement de l'extrémité du tuyau et d'un tube de sortie (68) situé au niveau du fond pour la matière extraite.

2. Dispositif selon la revendication 1, caractérisé en ce que le tuyau (11) comporte plusieurs tronçons partiels réunis les uns aux autres par leurs extrémités.

3. Dispositif selon l'une des revendications 1 ou 2, caractérisé en ce que le récipient à choc (16) peut être mis en rotation conjointement avec le tambour à tuyau (13).

4. Dispositif selon l'une des revendications 1, 2 ou 3, caractérisé en ce que la face interne du récipient à choc (16) est munie d'une protection antiusure (69), et que, en particulier, elle est caoutchoutée.

5. Dispositif selon l'une des revendications 1 à 4, caractérisé en ce que le fond (67) du récipient à choc, qui s'étend avec une forme conique vers l'intérieur, est surmonté vers l'intérieur par le tube de sortie (68).

Fig. 1

# Fig. 2

0 034 289

Fig. 3

0 034 289

# Fig. 4

# Fig. 5

Fig. 6

Fig. 8

Fig. 7

Fig. 9

66  65  16  13  21  71  72  67  71  11  15  68  17  69  12

0 034 289